(19) Europäisches Patentamt
European Patent Office
Office européen des brevets

(11) **EP 1 567 827 B1**

(12) **EUROPÄISCHE PATENTSCHRIFT**

(45) Veröffentlichungstag und Bekanntmachung des Hinweises auf die Patenterteilung:
**25.07.2012 Patentblatt 2012/30**

(21) Anmeldenummer: **03776915.5**

(22) Anmeldetag: **22.11.2003**

(51) Int Cl.:
*G01B 11/24* (2006.01)　　*G01B 11/30* (2006.01)

(86) Internationale Anmeldenummer:
**PCT/EP2003/013152**

(87) Internationale Veröffentlichungsnummer:
**WO 2004/051186 (17.06.2004 Gazette 2004/25)**

(54) **VERFAHREN UND VORRICHTUNG ZUR OPTISCHEN FORMVERMESSUNG UND/ODER BEURTEILUNG**

METHOD AND DEVICE FOR OPTICAL FORM MEASUREMENT AND/OR ESTIMATION

PROCEDE ET DISPOSITIF DE MESURE DE FORME ET/OU D'EVALUATION PAR VOIE OPTIQUE

(84) Benannte Vertragsstaaten:
**AT BE BG CH CY CZ DE DK EE ES FI FR GB GR HU IE IT LI LU MC NL PT RO SE SI SK TR**

(30) Priorität: **29.11.2002 DE 10258130**
**19.09.2003 DE 10345349**

(43) Veröffentlichungstag der Anmeldung:
**31.08.2005 Patentblatt 2005/35**

(73) Patentinhaber: **OBE Ohnmacht & Baumgärtner GmbH & Co. KG**
**75228 Ispringen (DE)**

(72) Erfinder:
• **WAGNER, Christoph**
**75203 Königsbach (DE)**
• **WAGNER, Reiner**
**75228 Ispringen (DE)**

(74) Vertreter: **Gleiss, Alf-Olav et al**
**Gleiss Grosse Schrell & Partner**
**Patentanwälte Rechtsanwälte**
**Leitzstrasse 45**
**70469 Stuttgart (DE)**

(56) Entgegenhaltungen:
EP-A- 0 046 241　　EP-A- 0 047 936
WO-A1-01/69214　　US-A- 4 912 336
US-A- 5 777 244

• LEE M-R: "3D SHAPE RECONSTRUCTION OF HYBRID REFLECTANCE USING THE LMS ALGORITHM" INTERNATIONAL JOURNAL OF PATTERN RECOGNITION AND ARTIFICIAL INTELLIGENCE, WORLD SCIENTIFIC PUBLISHING COMPAGNY, SINGAPORE, SI, Bd. 15, Nr. 4, Juni 2001 (2001-06), Seiten 723-734, XP001110311 ISSN: 0218-0014
• PATENT ABSTRACTS OF JAPAN vol. 2000, no. 07, 29. September 2000 (2000-09-29) & JP 2000 097641 A (NIRECO CORP), 7. April 2000 (2000-04-07)
• LEE K M ET AL: "SHAPE FROM SHADING WITH A GENERALIZED REFLECTANCE MAP MODEL" COMPUTER VISION AND IMAGE UNDERSTANDING, ACADEMIC PRESS, US, Bd. 67, Nr. 2, 1. August 1997 (1997-08-01), Seiten 143-160, XP000656209 ISSN: 1077-3142

**Beschreibung**

Die Erfindung betrifft ein Verfahren zur optischen Formerfassung und/oder Beurteilung von Gegenständen und Oberflächen, insbesondere glänzenden Oberflächen. Mit dem Begriff glänzend werden im Weiteren Gegenstände bezeichnet, deren optische Rauigkeit im Übergangsbereich zwischen optisch rauen und optisch glatten Oberflächen liegt. Optisch raue Oberflächen sind dadurch definiert, dass sie eine Rauigkeit besitzen, die wesentlich höher ist als die Wellenlänge von sichtbarem Licht (etwa 0,5 Mikrometer), während optisch glatte Oberflächen eine Rauigkeit weit unter der Wellenlänge aufweisen. Aufgrund dieser Eigenschaft zeigen optisch raue Oberflächen eine ungerichtete, diffuse Reflexion bzw. Transmission von Licht. Beispiele hierfür sind Papier, Kreide, Mattscheiben etc. Optisch glatte Oberflächen dagegen spiegeln bzw. transmittieren einfallendes Licht gerichtet. Sie sind in der Lage, ein optisches Abbild ihrer Umgebung zu erzeugen. Als Beispiele sind ebene oder gewölbte Spiegel und polierte Metall- und Glasoberflächen (Linsen) zu nennen.

Im Übergangsbereich zwischen diesen beiden Extremen liegen die als glänzend bezeichneten Gegenstände. Diese Gegenstände sind von hoher Bedeutung, da sie sehr häufig anzutreffen sind. Insbesondere industriell hergestellte Gegenstände aus Metall, Kunststoff, aber auch Holz und andere Materialien gehören zu den glänzenden Gegenständen. Die industrielle Bearbeitung solcher Materialien (spanende Bearbeitung von Metall und Holz, Spritzgießen von Kunststoff, Pulverspritzguss von Metall und Keramik etc.) erzeugt Rauigkeiten im Bereich weniger Mikrometer, also in der Größenordnung der Wellenlänge von sichtbarem Licht (um 0,5 Mikrometer).

Für diffus streuende, optisch raue Oberflächen gibt es eine breite Palette von optischen 3D-Sensoren. Eines der am weitesten verbreiteten Verfahren beruht auf der Projektion von Streifenmustern. Die Muster werden aus einer Richtung projiziert und aus einer anderen mit einer Kamera beobachtet. Die Streifen scheinen für die Kamera, je nach Form des beobachteten Gegenstandes, mehr oder weniger deformiert. Aus der Deformation der Streifen kann auf die Form des Gegenstandes zurückgeschlossen werden. In der Regel werden mehr als drei Streifenmuster projiziert, wobei die Intensität der Streifen einen sinusförmigen Verlauf annimmt.

Aus der Vielzahl der übrigen Verfahren sollen die Verfahren der Gruppe "Shape from Shading" erwähnt werden, insbesondere das photometrische Stereoverfahren, da die Erfindung auf ihnen aufbaut. Diese Verfahren schließen aus der Helligkeitsstruktur einer Objektoberfläche auf dessen Form. Eine detaillierte Beschreibung erscheint nachfolgend.

Auch für optisch glatte Oberflächen sind Verfahren bekannt, die eine dreidimensionale Vermessung ermöglichen. Zum Test von einfachen Oberflächenformen, wie ebenen oder sphärischen Flächen (Linsen, Spiegel etc.), kommen vorwiegend interferometrische Verfahren zum Einsatz. Bei komplizierter geformten Flächen wie Asphären kommen das Hartmann-Verfahren und der Shack-Hartmann-Test zum Einsatz. Hier beobachtet man die Ablenkung eines dünnen Strahlenbündels durch den zu vermessenden Gegenstand. Andere Verfahren beobachten ein Gittermuster, welches an der Gegenstandsoberfläche reflektiert bzw. transmittiert wird. Je nach deren Form erscheint das Gitter mehr oder weniger deformiert. Diese Verfahren lassen sich unter dem Stichpunkt der deflektometrischen Verfahren zusammenfassen. Ihnen ist gemeinsam, dass sie die Strahlablenkung bestimmen und daraus auf die Form der Oberfläche schließen. Die deflektometrischen Verfahren beruhen auf dem Reflexionsgesetz bzw. Brechungsgesetz, das den Zusammenhang zwischen einfallendem Strahl, Oberflächennormale und dem reflektierten bzw. transmittierten Strahl beschreibt.

Die Vermessung von Oberflächen im Übergangsbereich zwischen den optisch rauen und optisch glatten Oberflächen ist allerdings bislang noch nicht gelöst. Die Verfahren der einen, als auch der anderen Kategorie versagen für diesen Fall. Man kann zwar mit einem Sensor für raue Oberflächen mit gelegentlich vorkommenden Glanzstellen zurechtkommen, dominiert aber Glanz über diffuser Streuung, so ist ein solcher Sensor ungeeignet. Auf der anderen Seite wird ein Sensor für optisch glatte Oberflächen, insbesondere ein deflektometrischer Sensor, Mühe haben, wenn die Oberfläche zu rau ist, um eine klare optische Abbildung zu ermöglichen. Es muss beispielsweise sichergestellt sein, dass die feine Struktur des Gitters noch sichtbar ist. Geringere Anforderungen an die Qualität der Oberfläche stellt das Verfahren mit Sinusstreifen, da sinusförmige Streifen ein höheres Maß an Unschärfe erlauben. Doch auch hier muss sichergestellt sein, dass die Struktur der Streifen immer noch sichtbar ist.

Die bekannten optischen Sensoren liefern also gerade bei glänzenden Oberflächen aus dem Übergangsbereich, die sehr häufig bei industriell gefertigten Produkten vorkommen, keine zufrieden stellenden Ergebnisse.

Aus der Patentschrift US 4,912,336 sind ein Verfahren und eine Vorrichtung zur Formerkennung von rauen, glatten und glänzenden Oberflächen bekannt. Hierbei werden nacheinander Lichtquellen angeschaltet, die beabstandet und gleichmäßig verteilt auf einem Halbkreis um einen vorzugsweise hemisphärisch ausgeführten Streukörper angeordnet sind, wobei durch die Anstrahlung des Streukörpers sogenannte verbreiterte Lichtquellen erzeugt werden, über die die zu erfassende Körperoberfläche beleuchtet wird. Das auf die Oberfläche auftreffende Licht wird in eine Kamera reflektiert und ausgewertet.

Es ist daher Aufgabe der Erfindung, ein Verfahren zu schaffen, das diesen Nachteil vermeidet.

Diese Aufgabe wird durch ein Verfahren mit den Merkmalen nach Anspruch 1 gelöst. Dieses zeichnet sich dadurch aus, dass zwei an sich bekannte Verfahren, die sich auf den ersten Blick gegenseitig auszuschließen scheinen, mit Hilfe eines besonders geformten optischen Elementes, insbesondere eines Streukörpers, kombiniert werden. Es handelt sich zum Einen um ein an sich bekanntes photometrisches Stereoverfahren. Dieses Verfahren kommt an diffus reflektierenden Oberflächen zum Einsatz, versagt aber bei glänzenden Oberflächen. Zum Anderen handelt es sich um ein deflektometrisches Verfahren für reflektierende bzw. transmittierende Oberflächen. Die Anwendungsbereiche beider Verfahren werden durch das optische Element derart erweitert, dass das resultierende Gesamtverfahren besonders gute Ergebnisse bei glänzenden Oberflächen liefert.

Weitere vorteilhafte Ausführungsformen des Verfahrens sich aus den übrigen Unteransprüchen.

Die Erfindung wird im Folgenden anhand einer Darstellung der erfindungsgemäß kombinierten Verfahren und einer Zeichnung näher erläutert. Es zeigen:

Figur 1 eine bekannte Vorrichtung zur Durchführung eines photometrischen Stereoverfahrens;

Figur 2 eine teilweise Darstellung einer bekannten Vorrichtung zur Durchführung eines deflektometrischen Verfahrens und

Figur 3 eine schematisierte Darstellung eines Ausführungsbeispiels einer Vorrichtung zur Durchführung des erfindungsgemäßen Verfahrens zur optischen Formerfassung.

Das photometrische Stereoverfahren gehört zu einer größeren Gruppe von Verfahren, die unter dem Namen "Shape from Shading" bekannt sind. Bei diesen Verfahren geht es darum, aus der Variation der Helligkeit in einem Bild auf die Form des abgebildeten Objektes zu schließen. Betrachtet man beispielsweise die Fotografie eines Gesichtes, so stellt man Helligkeitsschwankungen fest, obwohl man annehmen kann, dass sich der Reflexionskoeffizient der Haut kaum ändert. Vielmehr entstehen diese Schwankungen dadurch, dass bestimmte Teile der Oberfläche so orientiert sind, dass sie mehr Licht zur Kamera strahlen als andere. Fällt das Licht einer Quelle senkrecht auf die Oberfläche, so ist die Helligkeit maximal, bei streifendem Einfall ist sie minimal. Ein anschauliches Beispiel bietet auch die Beleuchtung der Erdoberfläche durch die Sonne. Zur Mittagszeit im Sommer scheint die Sonne nahezu senkrecht auf die Erdoberfläche, was große Helligkeit bewirkt. Bei Sonnenuntergang streift das Licht gerade die Oberfläche und man hat geringe Helligkeit. Bei Shape from Shading gibt es unterschiedliche Fragestellungen.

Eine Gruppe von Verfahren beschäftigt sich damit, die Form einer als untexturiert (überall gleicher Reflexionskoeffizient) angenommenen Oberfläche zu ermitteln. Andere Verfahren bestimmen neben der Form des Objektes auch die Position der Lichtquelle (Source from Shading). Beim photometrischen Stereoverfahren wiederum ist die Position der Lichtquellen a priori bekannt und Objekttextur ist zugelassen. Dies ist im Blick auf einen vielseitig verwendbaren Sensor besonders interessant, denn in der Praxis ist die Textur meist nicht bekannt. Im Weiteren geht es deshalb um ein photometrisches Stereoverfahren.

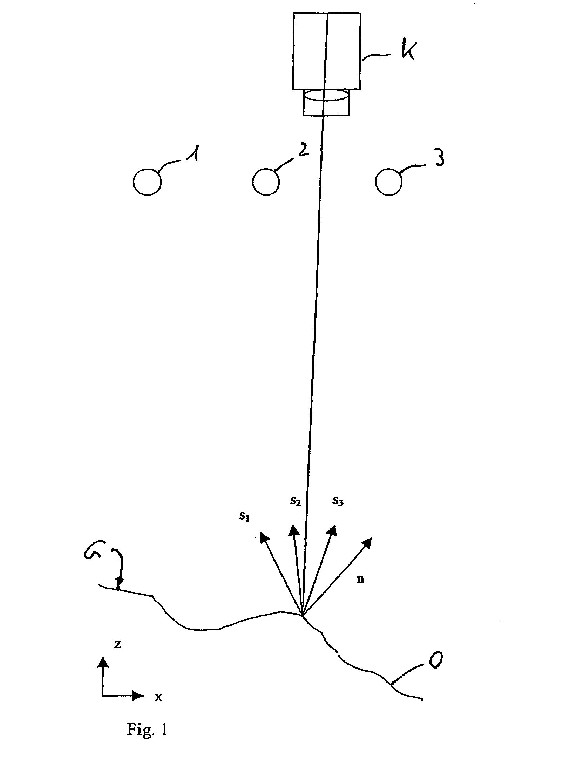

Das mittels einer Vorrichtung gemäß Figur 1 durchführbare Verfahren des photometrischen Stereo soll hier wiedergegeben werden. Man geht davon aus, dass ein zu vermessender Gegenstand G mit der dreidimensionalen Form z(x,y) nacheinander von drei punktförmigen Lichtquellen 1, 2, 3 beleuchtet wird. In Figur 1 ist die Oberfläche O des Gegenstands G durch eine Linie angedeutet. Im einfachsten Fall kann man annehmen, dass sich die Lichtquellen in großer Entfernung befinden und so die Beleuchtungsrichtung über dem Gegenstand G für jede Quelle konstant bleibt. Besonders einfache Verhältnisse liegen vor, wenn die Oberfläche O als Lambert-Streuer (ideale ungerichtete Streuung) dargestellt werden kann. Beim Lambert-Streuer hängt die gestreute Intensität des Gegenstands G nur von der Beleuchtungsrichtung und der Neigung des Gegenstands G, nicht aber von der Beobachtungsrichtung ab. Für jede der drei Lichtquellen 1, 2, 3 nimmt eine Kamera K ein eigenes Bild auf. Die Position des Gegenstandes G und der Kamera K bleibt dabei fest.

Zur mathematischen Darstellung des photometrischen Stereoverfahrens benötigt man die drei Beleuchtungsrichtungen und den Normalenvektor $\overline{n}(x, y)$ der auch als Objektoberfläche bezeichneten Oberfläche O des Gegenstands G. Die Beleuchtungsrichtungen werden durch die Vektoren $\overline{s}_1$, $\overline{s}_2$ und $\overline{s}_3$ beschrieben. Sie weisen von der Objektoberfläche zur jeweiligen Lichtquelle.

$$\vec{s}_1 = \left(s_{11}, s_{12}, s_{13}\right)^T$$

$$\vec{s}_2 = \left(s_{21}, s_{22}, s_{23}\right)^T$$

$$\vec{s}_3 = \left(s_{31}, s_{32}, s_{33}\right)^T$$

Da sich die Lichtquellen in großer Entfernung befinden, bleiben diese Vektoren für alle Punkte der Oberfläche O näherungsweise konstant. Der Normalenvektor $\overline{n}(x, y)$ dagegen variiert entsprechend der Form der Oberfläche O und ist als lokaler Normalenvektor zu verstehen.

$$\vec{n}(x,y) = \left(n_x(x,y), n_y(x,y), n_z(x,y)\right)^T$$

Es wird angenommen, dass die Oberfläche z (x,y) differenzierbar ist und der Normalenvektor überall existiert. Für den Fall, dass z(x,y) aufgrund von Kanten oder Sprüngen nicht differenzierbar ist, kann man die Oberfläche in differenzierbare Abschnitte aufteilen. Die Kamera K nimmt die Bilder $E_1(x,y)$, $E_2(x,y)$ und $E_3(x,y)$ des Gegenstands G auf, jeweils ein Bild mit Lichtquelle 1, 2 und 3. Die Kamera K befindet sich in großer Entfernung in Richtung der z-Achse, und jedes Bildelement nimmt die einfallende Beleuchtungsstärke $E_i(x,y)$ mit $i = 1,2,3$ auf, die den Koordinaten $(x,y)$ der Oberfläche O zugeordnet werden kann. Nach dem Lambert'schen Gesetz variiert die gestreute Leuchtdichte mit dem Kosinus zwischen der Beleuchtungsrichtung $\bar{s}_i$ und dem Normalenvektor $\bar{n}(x,y)$. Alternativ kann man die gestreute Leuchtdichte auch über das Skalarprodukt von Beleuchtungsrichtung und Normalenrichtung ausdrücken. Diese Darstellung hat den Vorteil, dass die Zusammenhänge linear dargestellt werden können. Neben der Neigung der Oberfläche O und der Beleuchtungsrichtung hängt die gestreute Leuchtdichte auch vom lokalen Reflexionskoeffizienten $\rho(x,y)$ der Oberfläche O (Textur) und der Beleuchtungsstärke der Lichtquellen und den Parametern der Kameraoptik ab. Alle konstanten Faktoren wie die Beleuchtungsstärke der Lichtquellen und die Parameter der Kameraoptik werden in der Länge des Beleuchtungsvektors zusammengefasst. Damit kann man schreiben

$$E_1 = \rho \cdot \vec{s}_1 \cdot \vec{n}$$

$$E_2 = \rho \cdot \vec{s}_2 \cdot \vec{n}$$

$$E_3 = \rho \cdot \vec{s}_3 \cdot \vec{n}$$

Diese drei Gleichungen kann man zu einer einzigen in Matrixschreibweise zusammenfassen, wenn man folgende Schreibweise für die Bilder einführt.

$$\vec{E} = \left(E_1, E_2, E_3\right)^T$$

Die Beleuchtungsvektoren bilden die Zeilen der Beleuchtungsmatrix

$$S = \begin{pmatrix} s_{11} & s_{12} & s_{13} \\ s_{21} & s_{22} & s_{23} \\ s_{31} & s_{32} & s_{33} \end{pmatrix}$$

Damit kann man schreiben

$$\vec{E} = \rho \cdot S \cdot \vec{n}$$

Aufgelöst nach $\bar{n}$ bzw. p erhält man

$$\vec{n} = \frac{1}{\rho} \cdot S^{-1} \cdot \vec{E}$$

mit

$$\rho = \left\| S^{-1} \cdot \vec{E} \right\|$$

Die Beleuchtungsmatrix $S$ lässt sich immer dann invertieren, wenn die Beleuchtungsvektoren linear unabhängig sind, sprich wenn der Gegenstand G und die drei Lichtquellen 1, 2, 3 nicht in einer Ebene liegen.
Diese mathematische Beschreibung des photometrischen Stereoverfahrens mit Hilfe von Vektoren bietet den Vorteil gegenüber anderen Beschreibungen (beispielsweise die Beschreibungen mit Hilfe von Winkeln), dass ein linearer Zusammenhang zwischen Normalenrichtung, den Beleuchtungsrichtungen und den Beleuchtungsstärken $E_1$, $E_2$ und $E_3$ hergestellt wird. Dieser lineare Zusammenhang kann mathematisch einfach nach der gesuchten Größe, der Normalenrichtung, aufgelöst werden: es muss lediglich die Beleuchtungsmatrix invertiert werden. Damit sind auch dreidimensionale Beleuchtungsanordnungen, bei denen die Normalenrichtung und die verschiedenen Beleuchtungsrichtungen nicht in einer Ebene liegen, mathematisch gut handhabbar, was für andere Beschreibungen (beispielsweise die Beschreibungen mit Hilfe von Winkeln) nicht möglich ist. Dies ist im weiteren von großer Bedeutung für das erfindungsgemäße Verfahren, da es ebenfalls auf einer vektoriellen Beschreibung basiert und somit dreidimensionale Beleuchtungsanordnungen berücksichtigen und dreidimensionale Objekte vermessen kann. Ist der Normalenvektor ermittelt, lässt sich die Form der Objektoberfläche $z(x,y)$ problemlos mit Hilfe der partiellen Ableitungen p und q nach $x$ und $y$ darstellen. Dies ist vorteilhaft für die spätere Integration der Form $z(x,y)$.

$$p = \frac{\partial z}{\partial x} = -\frac{n_x}{n_z}$$

$$q = \frac{\partial z}{\partial y} = -\frac{n_y}{n_z}$$

Diese Beschreibung des photometrischen Stereo gilt für Lambertsche Oberflächen und weit entfernte Lichtquellen. Dieser Spezialfall wurde gewählt, um die Funktion des Verfahrens möglichst einfach darstellen zu können. Für Lichtquellen in endlicher Entfernung und Oberflächen, die nicht dem Lambert-Gesetz gehorchen, ist es möglich, das Verfahren anzupassen, was hier allerdings nicht weiter verfolgt werden soll.

Bislang liegen die Formdaten der Oberfläche O als Normalenvektor $\overline{n}(x,y)$ bzw. als partielle Ableitungen (hier auch als lokale Neigung bezeichnet)

$$p = \frac{\partial z}{\partial x} = -\frac{n_x}{n_z}$$

$$q = \frac{\partial z}{\partial y} = -\frac{n_y}{n_z}$$

vor. Um die Form $z(x,y)$ zu gewinnen, müssen die partiellen Ableitungen aufintegriert werden.

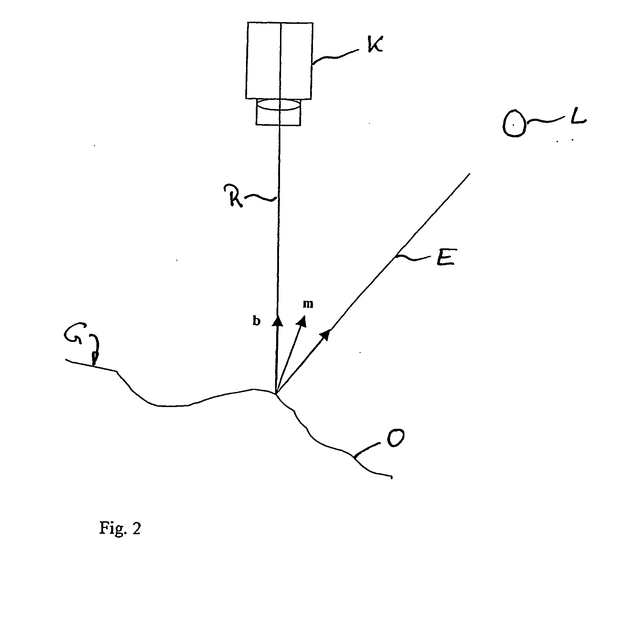

Neben dem photometrischen Stereoverfahren greift die Erfindung zurück auf die Deflektometrie. Den deflektometrischen Verfahren ist gemeinsam, dass sie die Ablenkung eines Strahls an einer reflektierenden bzw. transmittierenden Oberfläche bestimmen und daraus auf deren Form schließen. Sie beruhen auf dem Reflexionsgesetz bzw. Brechungsgesetz, das den Zusammenhang zwischen einfallendem Strahl, der Oberflächennormalen und dem reflektierten Strahl beschreibt (siehe Figur 2). Figur 2 zeigt eine Vorrichtung mit einer Kamera K, die auf einen von einer Lichtquelle L beleuchteten Gegenstand G gerichtet ist, um dessen Oberfläche O zu erfassen. Im Fall der Reflexion liegen einfallender Strahl E, reflektierter Strahl R und Oberflächennormale $\overline{m}$ in einer Ebene. Der Winkel zwischen einfallendem Strahl und Oberflächennormale bzw. reflektiertem Strahl und Oberflächennormale ist gleich groß. Kennzeichnet man den einfallenden Strahl E durch den Einheitsvektor von der Oberfläche O in Richtung der Lichtquelle L und den reflektierten Stahl R analog durch den Einheitsvektor von der Oberfläche O in Richtung der Beobachtung $\overline{b}$, so kann man eine einfache Beschreibung gewinnen. Der Normalenvektor $\overline{m}$ bildet dann die (auf die Länge Eins normierte) Summe aus dem Vektor des einfallenden Strahls E und des reflektierten Strahls R.

Deflektometrische Verfahren werden bisher für optisch glatte Oberflächen verwendet. Das photometrische Stereoverfahren und das Verfahren der Deflektometrie scheinen sich auf den ersten Blick gegenseitig zu widersprechen, da die zu vermessende Oberfläche nicht gleichzeitig optisch rau und optisch glatt sein kann. Fügt man allerdings ein geeignetes optisches Element ein, so lassen sich die beiden Verfahren vorteilhaft kombinieren. Die Kombination beider Verfahren wird im Folgenden als "photometrische Deflektometrie" bezeichnet. Bei diesem optischen Element handelt es sich um einen geeignet geformten, vorzugsweise halbkugelförmigen, insbesondere zumindest teilweise rotationssymmetrisch aufgebauten, durchscheinenden Streukörper. Der deflektometrische Anteil des Verfahren findet sein Gegenüber in der glänzenden Oberfläche des Prüflings, der photometrische im Streukörper. In der beschriebenen Kombination der Verfahren ist es möglich, stark glänzende Oberflächen zu vermessen.

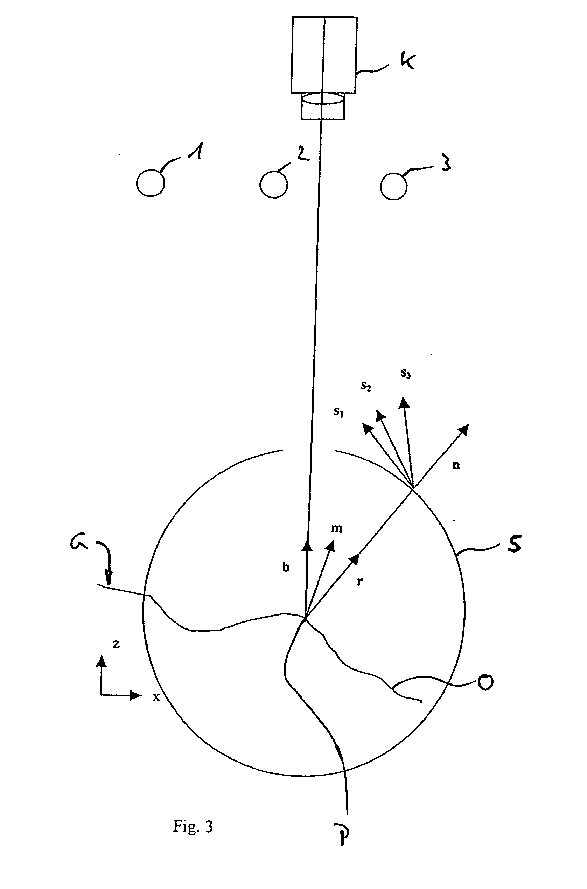

Eine Vorrichtung zur photometrischen Deflektometrie in Reflexion ist in Figur 3 dargestellt und vorzugsweise wie folgt aufgebaut: Eine Kamera K ist auf einen glänzenden auch als Prüfling bezeichneten Gegenstand G ausgerichtet. Dessen Oberfläche O reflektiert Licht, das von einem vorzugsweise halbkugelförmigen Streukörper S ausgeht in Richtung der Kamera K. Soll das Verfahren statt in Reflexion in Transmission verwendet werden, muss die Kamera K in entgegengesetzter Richtung, hier von unten, auf den Gegenstand G ausgerichtet werden. Wegen seiner Rauigkeit erzeugt der Gegenstand G kein klares, sondern ein mehr oder weniger verschwommenes Abbild des Streukörpers S. Das verschwommene Bild stellt kein Hindernis für das Verfahren dar, wie es sonst bei deflektometrischen Verfahren der Fall ist. Hierauf wird im Weitern noch eingegangen. Der Streukörper S wird seinerseits von mehreren Lichtquellen 1, 2, 3,... (vorzugsweise drei) beleuchtet, wie es für photometrische Verfahren üblich ist. Die zugehörigen Beleuchtungsvektoren von einem beispielhaft gewählten Punkt P des Streukörpers S zu den Lichtquellen sind $\overline{s}_1$, $\overline{s}_2$ und $\overline{s}_3$. Vorzugsweise liegen Gegenstand G und Lichtquellen 1, 2, 3 nicht in einer gemeinsamen Ebene, sondern sind räumlich, in drei Dimensionen angeordnet.

Vorzugsweise ist zunächst die Lichtquelle 1 eingeschaltet, die anderen sind abgeschaltet und die Kamera K nimmt ein Bild 4a des Gegenstands G unter dieser Beleuchtungssituation auf. Dieser Ablauf wiederholt sich, nachdem die Lichtquelle 2 angeschaltet und die anderen Lichtquellen abgeschaltet sind, ebenso für Lichtquelle 3 usw. Hierbei werden Bilder 4b, 4c usw. aufgenommen. Wahlweise können die Lichtquellen auch in einer anderen Reihenfolge eingeschaltet werden. Ebenso können Lichtquellen gemeinsam eingeschaltet sein, z. B. Lichtquelle 1 und 2, dann Lichtquelle 2 und 3, sowie schließlich Lichtquelle 3 und 1. Ebenso sind Anordnungen mit mehr oder weniger als drei Lichtquellen möglich.

An die Aufnahme schließt sich die Auswertung der Bilder 4a, 4b, 4c entsprechend des photometrischen Stereoverfahrens an. Wie oben beschrieben, kann man aus der Lage der Lichtquellen 1, 2, 3 und den Grauwerten der Bildpunkte der Bilder 4a, 4b, 4c auf den Normalenvektor $\bar{n}(x,y)$ beziehungsweise die Neigung des Streukörpers S schließen.

$$\bar{n} = \frac{1}{\rho} \cdot S^{-1} \cdot \bar{E}$$

mit

$$\rho = \left\| S^{-1} \cdot \bar{E} \right\|$$

Beim gewöhnlichen photometrischen Stereoverfahren ist dies die Oberflächennormale des Gegenstandes G, bei der photometrischen Deflektometrie aber die Normale des Streukörpers S. Hierin liegt eine ganz wesentliche Neuerung: Das photometrische Stereoverfahren wird dazu eingesetzt, jeden Ort auf der der Streukörperoberfläche eindeutig zu codieren. Die Codierung kann gedanklich in verschiedene Schritte unterteilt werden:

- Die Form des Streukörpers ist so gewählt, dass jeder Ort auf der Streukörperoberfläche einen Normalenvektor $\bar{n}$ besitzt, der nur einmal vorkommt. Vorzugsweise ist dies eine Kugel, eine Ellipsoid, ein rotationssymmetrischer Körper oder Teile hiervon. Umgekehrt gibt es zu jedem Normalenvektor nur einen Ort auf dem Streukörper. Es liegt also eine eindeutige Zuordnung vor.

- Weiterhin werden durch das photometrische Stereoverfahren jedem Normalenvektor $\bar{n}$ der Streukörperoberfläche die rückgestreuten Leuchtdichten zugeordnet und umgekehrt.

- Die rückgestreuten Leuchdichten am Streukörper sind wiederum über die Reflexion an der Gegenstandsoberfläche eindeutig den Beleuchtungsstärken $E_1$, $E_2$ und $E_3$ der Kamerabilder zugeordnet.

Wenn nun der Ort auf dem Streukörper eindeutig dem Normalenvektor $\bar{n}$, dieser eindeutig der rückgestreuten Leuchtdichte und diese wiederum den Beleuchtungsstärken $E_1$, $E_2$ und $E_3$ der mit der Kamera aufgenommenen Bilder zugeordnet ist, sind Ort und Beleuchtungsstärke einander eindeutig zugeordnet. Aus den Beleuchtungsstärken in den Bildern ist es demnach möglich, zurückzuverfolgen, welcher Ort des Streukörpers das Licht gestreut hat. Damit ist es gelungen, die Streukörperoberfläche eindeutig zu codieren. Mit bereits drei Beleuchtungsrichtungen kann jeder Ort der Streukörperoberfläche im dreidimensionalen Raum unverwechselbar codiert werden. Diese Codierung besitzt klare Vorteile gegenüber anderen Verfahren, die beispielsweise den Streukörper abschnittsweise, Schritt für Schritt beleuchten. Solche Verfahren benötigen eine Vielzahl von Beleuchtungsrichtungen, können aber nur eine einzelne Linie auf dem Streukörper erfassen, was einer zweidimensionalen Erfassung des Objektes entspricht.

Demgegenüber gelingt es beim erfindungsgemäßen Verfahren, mit bereits drei Beleuchtungsrichtungen den Streukörper flächig zu codieren und damit eine dreidimensionale Vermessung des Objektes zu ermöglichen. Aus der eindeutigen Codierung des Ortes und dem Normalenvektor auf dem Streukörper wird nun die Normale $\bar{m}(x,y)$ der Gegenstandsoberfläche ermittelt.

$$\vec{m}(x,y) = \left( m_x(x,y), m_y(x,y), m_z(x,y) \right)^t$$

Im Folgenden wird von einem als Kugel ausgebildeten Streukörper S ausgegangen. Insbesondere besitzt eine Kugelfläche die spezielle Eigenschaft, dass jeder Einheitsvektor $\bar{r}(x,y)$ vom Mittelpunkt in Richtung der Oberfläche (radialer Vektor) parallel zum Normalenvektor $\bar{n}(x,y)$ in diesem Punkt ist (siehe Figur 3). Der radiale Vektor und der Normalenvektor des Gegenstand G sind wiederum über das Reflexionsgesetz bzw. Brechungsgesetz miteinander verknüpft (Deflektometrie). Ist der Gegenstand G klein im Vergleich zum Radius der Kugel, so liegen alle Objektpunkte näherungsweise im Mittelpunkt der Kugel. Auch ohne diese Annahme kann man den Normalenvektor am Gegenstand berechnen, hier soll allerdings ein kleiner Gegenstand angenommen werden, um eine einfache Darstellung zu ermöglichen. Die z-Achse des Koordinatensystems wird so gewählt, dass sie parallel zur optischen Achse der Kamera K verläuft. Entsprechend dem Reflexionsgesetz gilt für den Normalenvektor $\bar{m}(x,y)$ der Oberfläche

$$\vec{m} = const \cdot \left( \vec{n} + \vec{b} \right)$$

mit dem Einheitsvektor in Richtung der Beobachtung $\bar{b}$ und der Nebenbedingung, dass $\bar{m}$ und $\bar{n}$ Einheitsvektoren sind. Damit kann man den Normalenvektor des Gegenstand G für eine Vielzahl von Punkten der Gegenstandsoberfläche O bestimmen, hieraus die partiellen Ableitung $p$ und $q$ und aus diesen wiederum die Form der Oberfläche z(x,y) des Gegenstands G durch Integration.

Doch auch ohne die Integration der lokalen Neigung $p(x,y)$ und $q(x,y)$ zur Form $z(x,y)$ lassen sich bereits wertvolle Rückschlüsse über die Gegenstandsoberfläche ziehen. Wider Erwarten ist es sogar sinnvoll, die Auswertung noch vor dem Schritt der Integration abzubrechen. Eine grafische, grautoncodierte Darstellung der Neigung (Zwischenergebnis) ist für viele Anwendungen einer grafischen Darstellung von $z(x,y)$ (Endergebnis) sogar vorzuziehen. Dies ist insofern sehr erstaunlich, als ein Endergebnis in aller Regel mehr Aussagekraft hat als ein Zwischenergebnis. Gleiches gilt für eine Darstellung des lokalen Normalenvektors der Gegenstandsoberfläche bzw. seiner Komponenten. Neigung und Normalenvektor sind derartig unmittelbar verknüpft, dass für die folgende Argumentation der Begriff "Neigung" auch durch den Begriff "Normalenvekor" oder deren jeweiligen Komponenten ersetzt werden kann.

Die Neigungsdarstellung bietet insbesondere Vorteile, wenn es darum geht, die Form der Oberfläche einem menschlichen Betrachter darzustellen (Visualisierung) und hinsichtlich von Auffälligkeiten zu analysieren (Interpretation, Beurteilung). Die Neigung $p(x,y)$ und $q(x,y)$ werden als grautoncodierte Bilder an einem Monitor, Drucker etc. ausgegeben. Selbst kleinste Beulen, Erhebungen, Riefen, Grate etc. treten in der Neigungsdarstellung hervor.

Diese Vorteile der Neigungsdarstellung sind darin begründet, dass der menschliche Gesichtssinn von Natur aus darin geübt ist, Neigungsdaten zu interpretieren. Beim menschlichen Sehen werden Helligkeitsschattierungen genutzt (wie bei Shape from Shading und dem photometrischen Stereoverfahren), eine räumliche Vorstellung des betrachteten Gegenstands zu schaffen. Daneben gibt es noch andere Mechanismen, wie z. B. das Stereosehen, die ebenfalls zum räumlichen Eindruck beitragen. Im Vergleich zu den anderen Mechanismen des räumlichen Sehens ist das Neigungssehen die genauste Informationsquelle. So sind geübte Betrachter in der Lage, bei geeigneter Beleuchtung und geeignetem Blickwinkel aus der Schattierung selbst Unregelmäßigkeiten von wenigen 10 Mikrometern zu erkennen. Neben Schattierungen können auch Lichtreflexe an einem Gegenstand beziehungsweise Prüfling (wie bei den deflektometrischen Verfahren) einen räumlichen Eindruck vermitteln, der äußerst feine Details erkennen lässt.

Wird die grautoncodierte Neigungsdarstellung zusammen mit einem neigungsmessenden Verfahren wie dem photometrischen Stereoverfahren oder der photometrischen Deflektometrie eingesetzt, können sogar Unregelmäßigkeiten sichtbar gemacht werden, die das menschliche Auge am realen Gegenstand nicht feststellen kann. Für den Menschen sind Textur (lokale Helligkeit) und Neigungsinformation des Gegenstands immer vermischt. Es ist beispielsweise schwer abzuschätzen, ob eine als dunkel empfundene Linie auf einem Gegenstand von einem Formmerkmal, beispielsweise einen Riss, oder von einer dunkelfarbigen Markierung herrührt. Hier können die photometrische Deflektometrie und das photometrische Stereoverfahren Abhilfe schaffen. Sie berücksichtigen mehr als nur eine Beleuchtungssituation (anders als beim Gesichtssinn) und ermöglichen eine Trennung von Neigungsdaten und Textur. Als Neigungsbild visualisiert können also unsichtbare Merkmale sichtbar gemacht werden.

Auch bei der Genauigkeit bietet die Kombination der Neigungsmessung und Neigungsdarstellung Vorteile. Es können Details im Bereich von wenigen Mikrometern erfasst werden. Die Neigung wird visualisiert, wobei die Schattierungseffekte rechnerisch überhöht und betont werden können.

Zudem sind diese neigungsmessenden Verfahren robust gegenüber Verkippung und Verdrehung des Gegenstandes gegenüber der Beleuchtung. Der menschliche Beobachter kann beispielsweise eine flache Delle an einem glänzenden Gegenstand nur unter einer ganz bestimmten Richtung zur Beleuchtung erkennen. Ähnlich ist dies bei vielen Verfahren der Bildverarbeitung. Besonders kritisch ist die Wahl der Beleuchtung bei glänzenden Oberflächen. Treten auch nur kleinste Veränderungen in der Lage der Gegenstandsoberfläche zur Beleuchtung auf, beispielsweise durch Ungenauigkeiten der Zuführung oder durch Abweichungen des Gegenstandes selbst, so verändert sich das Aussehen der Oberfläche grundlegend aufgrund von unterschiedlichen Lichtreflexen. Ganz anders ist dies beim Verfahren der photometrischen Deflektometrie. Selbst am verkippten, glänzenden Gegenstand sind reproduzierbare Messungen und eine objektive Beurteilung möglich. Überdies ist die Neigungsdarstellung vorteilhaft für die maschinelle automatische Beurteilung von Oberflächen. Die als Neigung aufbereiteten Daten erleichtern beziehungsweise ermöglichen erst eine automatische Beurteilung vorzugsweise durch einen Computer oder eine andere elektronische Auswerteeinheit. Die bereits genannten Vorteile der Neigungsdarstellung gelten sinngemäß auch für eine automatische Bewertung.

Aufgrund der vielfältigen Vorteile einer Neigungsdarstellung könnte man sie auch für andere Verfahren, die direkt die Form $z(x,y)$ erfassen, in Betracht ziehen. Die Neigung $p(x,y)$ und $q(x,y)$ könnte dann durch numerische Differentiation gewonnen werden. Dabei ist allerdings zu berücksichtigen, dass eine Differentiation insbesondere das hochfrequente Rauschen, das in jeder realen Messung enthalten ist, verstärkt. Bei den neigungsmessenden Verfahren, insbesondere der photometrischen Deflektometrie und dem photometrischen Stereoverfahren ist dies nicht der Fall. Die Neigung wird hier direkt gemessen. Auch hier ist geringfügiges Messrauschen enthalten, es entfällt aber der Schritt einer numerischen Differentiation, der dieses Rauschen verschlimmern könnte.

Eine vorteilhafte Kombination von Messverfahren und Visualisierung ist demnach ein neigungsmessendes Verfahren zusammen mit einer Neigungsdarstellung.

An dieser Stelle soll auch erwähnt werden, dass das Verfahren der photometrischen Deflektometrie selbst bei optisch rauen Oberflächen einsetzbar ist. Die Gegenstandoberfläche liefert ein mehr oder weniger verschwommenes Bild des Streukörpers S. Bei anderen deflektometrischen Verfahren ist dies schädlich, da in der Regel fein strukturierte Muster wie Streifen, Punkte etc. abgebildet werden müssen. Dies ist bei der photometrischen Deflektometrie nicht der Fall. Die Helligkeit auf einem kugelförmigen Streukörper variiert so gleichmäßig, dass auch bei stark verschwommener Abbildung kaum Verfälschungen auftreten.

Damit ist die photometrische Deflektometrie anderen deflektometrischen Verfahren bei rauen und glänzenden Oberflächen überlegen.

Andererseits ist es auch dem photometrischen Stereoverfahren überlegen, das nur für diffus streuende Oberflächen anwendbar ist.

Ein weiterer Vorzug dieses Verfahrens liegt darin, dass bereits drei Kameraaufnahmen (entsprechend drei Beleuchtungsrichtungen) genügen, um die Form des Gegenstands zu ermitteln. Die Zeit für eine vollständige Messung kann daher sehr kurz gehalten werden, wie es in der industriellen Mess- und Prüftechnik gefordert wird. Eine weitere Reduktion auf lediglich eine einzige Kameraaufnahme wird insbesondere erreicht, wenn die drei Lichtquellen in den Farben Rot, Grün und Blau codiert werden und zur Beobachtung eine elektronische Farbkamera K eingesetzt wird. Die Farbkanäle Rot, Grün und Blau enthalten die Bilder 4a, 4b, 4c der entsprechen codierten Beleuchtungsrichtungen. Voraussetzung ist allerdings, dass der Gegenstand einfarbig ist. Die Reduktion einer Messung auf eine einzige Kameraaufnahme stellt einen entscheidenden Fortschritt dar. Bei entsprechend kurzer Belichtungszeit können, ähnlich einer Blitzlichtaufnahme in der Fotografie, auch bewegte Gegenstände ohne wesentliche Bewegungsunschärfe aufgenommen werden.

Die bisherigen Betrachtungen sind davon ausgegangen, dass glänzende Gegenstände vermessen werden sollen. Darüber hinaus können das beschriebene Verfahren und die zugehörige Vorrichtung aber auch für diffus streuende Gegenstände gewinnbringend eingesetzt werden. An diesen Oberflächen tritt das Prinzip des photometrischen Stereo nicht erst am Streukörper 1, sondern am Gegenstand selbst in Erscheinung. Der Streukörper 1 zusammen mit den Lichtquellen 1, 2, 3 usw. wirkt wie eine Reihe von ausgedehnten Lichtquellen. Räumlich ausgedehnte Lichtquellen haben den Vorteil, dass sie kohärentes optisches Rauschen, verursacht durch Speckle, minimieren können. Kohärentes Rauschen schlägt sich bei allen optischen 3D-Sensoren in der Messunsicherheit der Form nieder. Damit ermöglicht das beschriebene Verfahren die Messunsicherheit an diffusen Gegenständen zu reduzieren. Darüber hinaus kommt diese Eigenschaft auch einer präzisen Messung von glänzenden Oberflächen zu Gute.

Besonders vorteilhaft ist vorgesehen, dass die Ergebnisse der Formvermessung als Software-Datei zur Verfügung gestellt werden. Dies ermöglicht eine einfache Weiterverarbeitung derselben.

Außerdem ist es möglich, für die optische Abbildung ein Mikroskop und/oder ein Mikroskopobjektiv zu verwenden. So wird die bestehende Optik der Kamera K derart ersetzt und/oder ergänzt, dass auch die Oberflächen besonders kleiner Gegenstände vermessen werden können.

Bevorzugt sind als Lichtquellen auch Luminiszenzdioden (LEDs) einsetzbar. Diese sind günstig herstellbar und können schnell und einfach angesteuert werden.

Schließlich ist es denkbar, zur Beleuchtung eine oder mehrere Blitzlampen zu verwenden. Hierdurch können etwaige Messfehler, insbesondere verursacht durch Relativbewegungen zwischen Lichtquelle, Kamera K und zu vermessendem Gegenstand, die beispielsweise durch Vibrationen oder bewegte Gegenstände hervorgerufen werden können, aufgrund der kurzen Leuchtdauer von Blitzlampen sicher vermieden werden. Außerdem weisen Blitzlampen vorteilhafterweise eine hohe Leuchtkraft auf, so dass die Kamera K entsprechend weniger lichtempfindlich ausgelegt werden kann.

**Patentansprüche**

1. Verfahren zur optischen Formerfassung und/oder Beurteilung von optisch glatten, glänzenden oder optisch rauen Oberflächen, **dadurch gekennzeichnet, dass** ein photometrisches Stereoverfahren, ein deflektometrisches Verfahren und ein Streukörper (S) so kombiniert werden, dass die Orte auf der Streukörperoberfläche flächig codiert werden, indem die Form des Streukörpers (S) so gewählt ist, dass jedem Ort auf der Streukörperoberfläche eindeutig ein Normalenvektor zugeordnet ist, jedem Normalenvektor eindeutig eine rückgestreute Leuchtdichte am Streukörper (S) zugeordnet wird und die rückgestreuten Leuchtdichten den Beleuchtungsstärken von aufgenommenen Bildern zugeordnet werden.

2. Verfahren nach Anspruch 1, **dadurch gekennzeichnet, dass** der Streukörper (S) die Form einer Kugel, eines Ellipsoids, eines rotationssymmetrischen Körpers oder Teilen davon aufweist.

3. Verfahren nach einem der vorangehenden Ansprüche, **dadurch gekennzeichnet, dass** das Ergebnis der Formvermessung in Form einer Softwaredatei zur Verfügung gestellt wird.

4. Verfahren nach einem der vorangehenden Ansprüche, **dadurch gekennzeichnet, dass** eine elektronisch arbeitende Kamera (K) verwendet wird.

5. Verfahren nach einem der vorangehenden Ansprüche, **dadurch gekennzeichnet, dass** eine Farbkamera (K) verwendet wird.

6. Verfahren nach einem der vorangehenden Ansprüche, **dadurch gekennzeichnet**, das die Beleuchtung farblich codiert ist.

7. Verfahren nach einem der vorangehenden Ansprüche, **dadurch gekennzeichnet, dass** kohärentes Specklerauschen mit Hilfe einer ausgedehnten leuchtenden Streukörperfläche reduziert wird.

8. Verfahren nach einem der vorangehenden Ansprüche, **dadurch gekennzeichnet, dass** die lokale Neigung und/oder der lokale Normalenvektor der Oberfläche visualisiert und/oder elektronisch beurteilt wird.

9. Verfahren nach einem der vorangehenden Ansprüche, **dadurch gekennzeichnet, dass** mindestens eine Komponente der lokalen Neigung und/oder der lokale Normalenvektor der Oberfläche visualisiert und/oder elektronisch beurteilt wird.

10. Verfahren nach einem der vorangehenden Ansprüche, **dadurch gekennzeichnet, dass** die lokale Neigung und/oder der lokale Normalenvektor als Grauton und/oder Farbton codiert dargestellt wird.

11. Verfahren nach einem der vorangehenden Ansprüche, **dadurch gekennzeichnet, dass** mindestens eine Komponente der lokalen Neigung und/oder des lokalen Normalenvektors als Grauton und/oder Farbton codiert dargestellt wird.

**Claims**

1. Method for optical shape detection and/or evaluation of optically smooth, glossy or optically rough surfaces, **characterized in that** a photometric stereo method, a deflectometric method and a scattering body (S) are combined so that the positions on the scattering body surface are two-dimensionally encoded by selecting the shape of the scattering body (S) such that one normal vector is uniquely allocated to each position on the scattering body surface, a luminance back-scattered at the scattering body (S) is uniquely allocated to each normal vector and the back-scattered luminances are allocated to the illumination strengths of recorded images.

2. Method according to claim 1, **characterized in that** the scattering body (S) has the shape of a sphere, an ellipsoid, a rotationally symmetric body or parts thereof.

3. Method according to any of the preceding claims, **characterized in that** the result of the shape measurement is provided in the form of a software file.

4. Method according to any of the preceding claims, **characterized in that** an electronically operating camera (K) is used.

5. Method according to any of the preceding claims, **characterized in that** a colour camera (K) is used.

6. Method according to any of the preceding claims, **characterized in that** the illumination is colour-coded.

7. Method according to any of the preceding claims, **characterized in that** coherent speckle noise is reduced by using an extended luminous scattering body surface.

8. Method according to any of the preceding claims, **characterized in that** the local gradient and/or the local normal vector of the surface is/are visualized and/or electronically evaluated.

9. Method according to any of the preceding claims, **characterized in that** at least one component of the local gradient and/or the local normal vector of the surface is/are visualized and/or electronically evaluated.

10. Method according to any of the preceding claims, **characterized in that** the local gradient and/or the local normal vector is/are represented by being encoded as a shade of gray and/or a shade of colour.

11. Method according to any of the preceding claims, **characterized in that** at least one component of the local gradient and/or of the local normal vector is/are represented by being encoded as a shade of gray and/or a shade of colour.

**Revendications**

1. Procédé de détection de forme optique et/ou de jugement de surfaces lisses du point de vue optique, brillantes ou rugueuses du point de vue optique, **caractérisé en ce qu'**un procédé stéréo photométrique, un procédé déflectométrique et un corps de diffusion (S) sont combinés de sorte que les emplacements sur la surface du corps de diffusion sont codés de manière superficielle **en ce que** la forme du corps de diffusion (S) est choisie de sorte qu'un vecteur normal est associé de manière univoque à chaque emplacement sur la surface du corps de diffusion, une luminance rétrodiffusée sur le corps de diffusion (S) est associée de manière univoque à chaque vecteur normal et les luminances rétrodiffusées sont associées aux intensités lumineuses d'images enregistrées.

**2.** Procédé selon la revendication 1, **caractérisé en ce que** le corps de diffusion (S) présente la forme d'une sphère, d'un ellipsoïde, d'un corps à symétrie de rotation ou de parties de ceux-ci.

**3.** Procédé selon l'une quelconque des revendications précédentes, **caractérisé en ce que** le résultat du mesurage de forme est mis à disposition sous forme d'un fichier logiciel.

**4.** Procédé selon l'une quelconque des revendications précédentes, **caractérisé en ce qu'**une caméra à fonctionnement électronique (K) est utilisée.

**5.** Procédé selon l'une quelconque des revendications précédentes, **caractérisé en ce qu'**une caméra couleur (K) est utilisée.

**6.** Procédé selon l'une quelconque des revendications précédentes, **caractérisé en ce que** l'illumination est à codage couleur.

**7.** Procédé selon l'une quelconque des revendications précédentes, **caractérisé en ce que** le bruit de tavelures cohérent est réduit à l'aide d'une face du corps de diffusion lumineuse étendue.

**8.** Procédé selon l'une quelconque des revendications précédentes, **caractérisé en ce que** l'inclinaison locale et/ou le vecteur normal local de la surface est visualisé(e) et/ou jugé(e) de manière électronique.

**9.** Procédé selon l'une quelconque des revendications précédentes, **caractérisé en ce qu'**au moins un composant de l'inclinaison locale et/ou le vecteur normal local de la surface est visualisé et/ou jugé de manière électronique.

**10.** Procédé selon l'une quelconque des revendications précédentes, **caractérisé en ce que** l'inclinaison locale et/ou le vecteur normal local est représenté(e) de manière codée en tant que nuance de gris et/ou nuance de couleur.

**11.** Procédé selon l'une quelconque des revendications précédentes, **caractérisé en ce qu'**au moins un composant de l'inclinaison locale et/ou du vecteur normal local est représenté de manière codée en tant que nuance de gris et/ou nuance de couleur.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4912336 A